# EUROPEAN PATENT SPECIFICATION

(11) **EP 2 746 120 B1**
(45) Date of publication and mention of the grant of the patent: **22.01.2020**
(21) Application number: 13382496.1
(22) Date of filing: 05.12.2013
(51) Int. Cl.: B60T 7/06

(54) **SUPPORT SUITABLE FOR COUPLING AT LEAST ONE PEDAL TO A STRUCTURAL PORTION OF A MOTOR VEHICLE**
TRÄGER ZUR ANKOPPLUNG VON MINDESTENS EINEM PEDAL AN EINEN STRUKTURELLEN TEIL EINES KRAFTFAHRZEUGS
SUPPORT CONÇU POUR COUPLER AU MOINS UNE PÉDALE À UNE PARTIE STRUCTURELLE D'UN VÉHICULE AUTOMOBILE

(30) Priority: 20.12.2012 ES 201231984
(43) Date of publication of application: 25.06.2014
(73) Proprietor: Batz, S.Coop., 48140 Igorre (ES)
(72) Inventor: Alonso Alonso, Arturo, 48004 Bilbao (ES); Burguera Albizuri, Fernando, 48014 Bilbao (ES)
(74) Representative: Igartua, Ismael

(56) References cited:
- WO-A1-02/055354
- WO-A1-2005/006104
- US-A1- 2005 035 585

## Description

### TECHNICAL FIELD

The present invention is related to a support suitable for coupling at least one pedal to a structural portion of a motor vehicle, particularly with a hybrid pedal support. Such a support is known from WO 02/055354 A.

### PRIOR ART

Metal supports suitable for coupling pedals to a non-deformable portion of the motor vehicle are known. Although such supports comply with the mechanical requirements for these parts, their weight, the plurality of parts necessary and the need for additional processes for attaching said parts, such as welding or screwing, and accordingly the high cost of said metal supports, are all a drawback.

On the other hand, supports are known to be made of plastic and although they are lightweight, they have the drawback of taking up large volume, which limits their use in limited space situations, in addition to having worse mechanical features than the metal supports, which are sometimes insufficient for such parts.

WO2005/006104A1 describes a pedal support comprising a body comprising a metal casing and a plastic reinforcing element injection molded on the outside of the metal casing. Particularly, the portion of the support where the shaft is coupled with the support is formed by the reinforcing element and by the casing.

### DISCLOSURE OF THE INVENTION

The object of the invention is to provide a support suitable for coupling at least one pedal to a structural portion of a motor vehicle in accordance with the claims.

The support comprises a body comprising at least one coupling where the pedal is coupled through a shaft and at least one fixing zone to the structural portion and at least one reinforcement fixed to said body.

The body is made of a plastic material whereas the reinforcement is made of a metal material. The reinforcement comprises a central body that is fixed to the coupling, a first arm extending from the central body to a first fixing zone of the body and a second arm extending from the central body to a second fixing zone of the body. The arms together with the central body form a substantially V-shaped geometry, the central body being arranged as the vertex of said geometry.

A support weighing less than known metal supports since it is fundamentally made of plastic is obtained. Furthermore, since it is fundamentally made of plastic it enables greater design freedom with lower tolerance requirements. The reinforcement is a minimum metal reinforcement that is enough to relax stress produced in the maximum load zone of the support, said maximum load zone basically being the zone attaching the coupling to the respective fixing zones. The metal reinforcement provides the support with the necessary mechanical features of rigidity and strength, enabling the use of a plastic for the body that has worse mechanical features than that used if the entire support were made of plastic, with the subsequent economic savings.

A support with minimal weight but with the mechanical features of rigidity and strength required for a pedal support of a motor vehicle is thus obtained.

These and other advantages and features of the invention will become evident in view of the drawings and of the detailed description of the invention.

### DESCRIPTION OF THE DRAWINGS

Figure 1 shows a perspective view of the pedal assembled in a first embodiment of the support according to the invention.
Figure 2 shows another perspective view of the support shown in Figure 1.
Figure 3 shows an exploded view of the support shown in Figure 1.
Figure 4 shows another exploded view of the support shown in Figure 1.
Figure 5 shows a perspective view of the pedal assembled in a reinforcement of the support shown in Figure 1.
Figure 6 shows a perspective view of the pedal assembled in a second embodiment of the support according to the invention.
Figure 7 shows another perspective view of the support shown in Figure 6.
Figure 8 shows a partially sectioned view of the support shown in Figure 6.
Figure 9 shows another partially sectioned view of the support shown in Figure 6.
Figure 10 shows a reinforcement of the support shown in Figure 6.

### DETAILED DISCLOSURE OF THE INVENTION

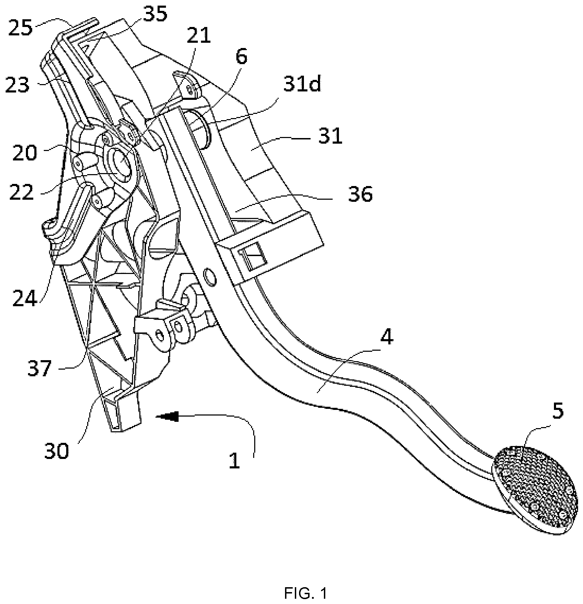

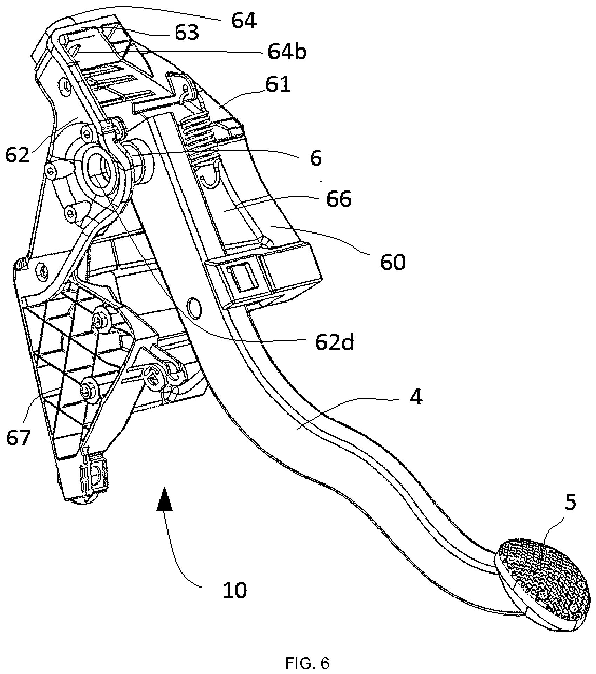

Figures 1 and 6 show a support 1;10 according to the invention suitable for coupling at least one pedal 4 to a structural portion of a motor vehicle that is not depicted. The pedal 4, which can be a brake, clutch or gas pedal, comprises a shaft 6 coupled at one end, through which shaft 6 the pedal 4 is coupled to the support 1;10, and a cover pad 5 at the opposite end, whereby the user operates the pedal 4.

The support 1;10 comprises a body 30;60 and a reinforcement 20;40 fixed to said body 30;60. The body 30;60 is made of a plastic material, whereas the reinforcement 20;40 is made of metal.

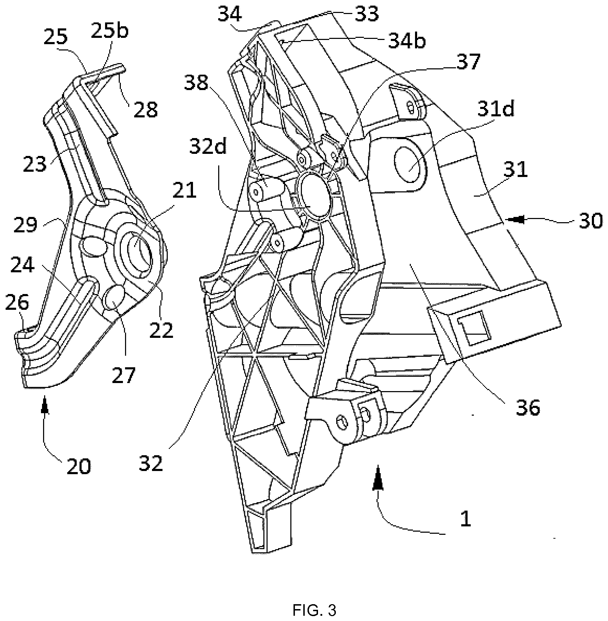

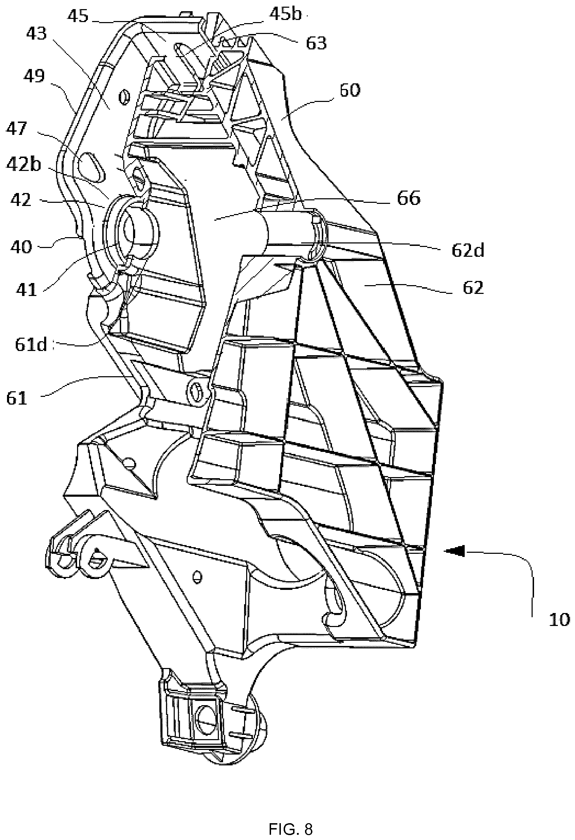

The body 30;60 comprises couplings 31d,32d;61d,62d, shown in Figures 3 and 8, wherein the shaft 6 together with the pedal 4 are coupled in an articulated manner to the support 1;10. On the other hand, the body 30;60 comprises fixing zones 34,35;64,65 through which the support 1;10 is fixed to the substantially non-deformable structural portion of the motor vehicle.

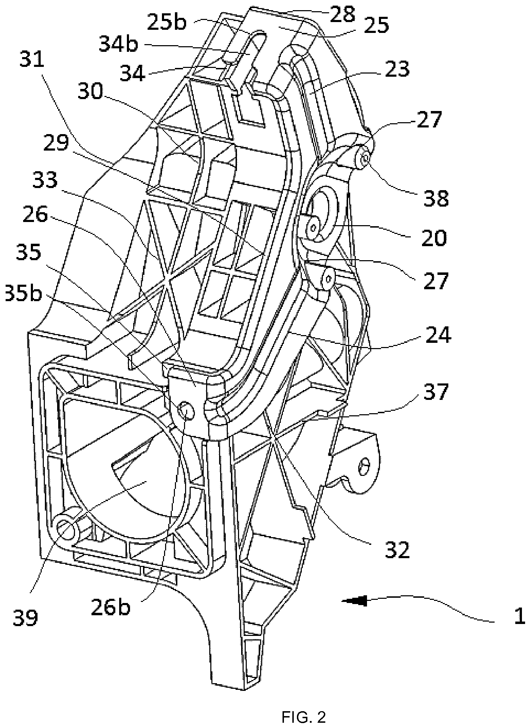

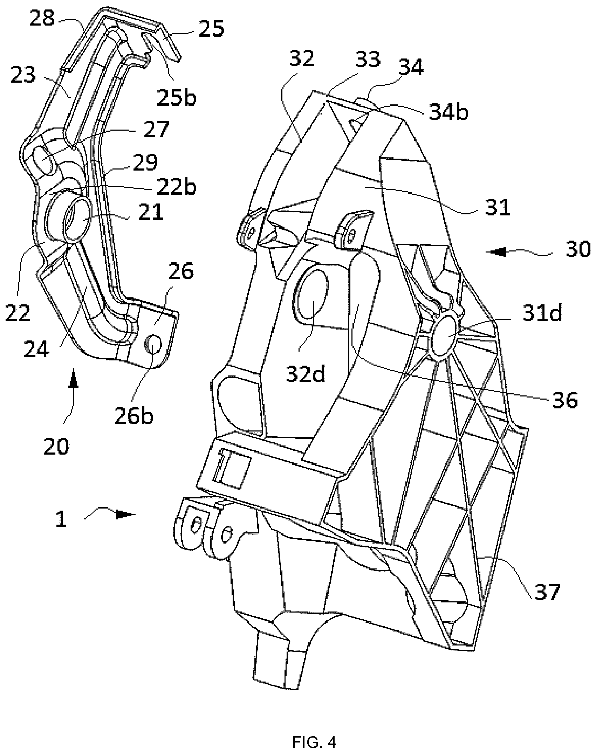

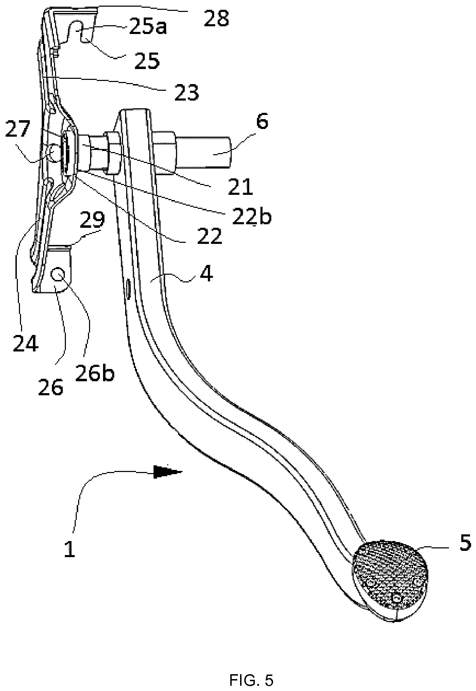

In the first embodiment shown in Figures 1 to 5, the body 30 comprises side walls 31,32 arranged substantially parallel to one another, attached through a back wall 33, the pedal 4 being coupled to the side walls 31,32 through the shaft 6. Particularly, the shaft 6 is coupled to the coupling 31d,32d respectively arranged in each side wall 31,32. Each coupling 31d,32d is formed by a respective hole where the shaft 6 is coupled. The side walls 31,32 and the back wall 33 demarcate a housing 36 where the shaft 6 and the pedal 4 are housed at least partially. Furthermore, the back wall 33 comprises an opening 39, shown in Figure 2, traversed by a transmission element coupled to the pedal 4, not depicted in the drawings.

On the other hand, the fixing zones 34,35 are arranged in the back wall 33. Therefore, a substantially planar first fixing zone 34 arranged close to the housing 31d,32d, is communicated with the housing 36 through a first slot 34b, shown in detail in Figure 3, whereas a second fixing zone 35 is arranged close to the opening 39, the second fixing zone 35 comprising a fixing hole 35b.

In this first embodiment shown in Figures 1 to 5, the reinforcement 20 is coupled to one of the side walls 31,32, called the first side wall 32. The reinforcement 20, shown in detail in Figures 3 to 5, comprises a central body 22 coupled to the coupling 32d corresponding to the first side wall 32, a first arm 23 extending from the central body 22 to the first fixing zone 34, and a second arm 24 extending from the central body 22 to the second fixing zone 35, the arms 23,24 forming a substantially V-shaped geometry, the central body 22 being arranged as the vertex of said geometry. The central body 22 comprises a ring-shaped projection 21 extending from a substantially orthogonal base 22b. The ring-shaped projection 21 is housed at least partially in the respective coupling 32d, the substantially planar base 22b being supported on the first side wall 32, particularly on ribs 37 comprised in the body 30, shown in Figure 3. The support 1 can thus be made rigid and stronger by using minimum reinforcement 20 extending through the zone of the body 30 that is subjected to the most stress. The reinforcement 20 optimally transmits the stress generated in the coupling 32d to the structural portion of the motor vehicle, through the respective fixing zones 34,35 of the body 30.

On the other hand, the central body 22 is arranged deep drawn with respect to the arms 23,24, the arms 23,24 being supported on the first side wall 32, the first side wall 32 comprising a geometry substantially adapted to the reinforcement 20.

The reinforcement 20 comprises holes 27 in the central body 22 collaborating with projections 38 extending from the first side wall 32 for correctly positioning the reinforcement 20 with respect to the body 30 for subsequent fixing to said body 30. The projections 38 extend substantially orthogonal to the first side wall 32.

On the other hand, each arm 23,24 comprises a bent end 25,26, said bent end 25,26 being arranged facing the respective fixing zone 34,35 of the body 30. The first bent end 25 corresponding to the first arm 23 is arranged in contact with the first fixing zone 34, whereas the second bent end 26 corresponding to the second arm 24 is arranged in contact with the second fixing zone 35. Furthermore, the first bent end 25 comprises a slot 25b that is aligned with the slot 34b of the first fixing zone 34 for fixing to the structural portion of the vehicle by means of fixing means that are not depicted, preferably by screwing. Both slots 25b,34b are open slots. On the other hand, the second bent end 26 comprises a hole 26b that is coaxial with the hole 35b of the second fixing zone 35 of the body 30 for fixing to the structural portion of the vehicle by means of fixing means that are not depicted, preferably by screwing.

On the other hand, the reinforcement 20 comprises a side flange 28,29 extending at least partially along the perimeter of the reinforcement 20, substantially adapted to the geometry of the back wall 33 and to the first side wall 32 of the body 30. This flange 28,29 is designed to reinforce the bent ends 25,26 to prevent the support 1 from deforming in the event of high loads applied on the pedal 4.

On the other hand, the side walls 31,32 as well as the back wall 33 comprise ribs 37 reinforcing the body 30.

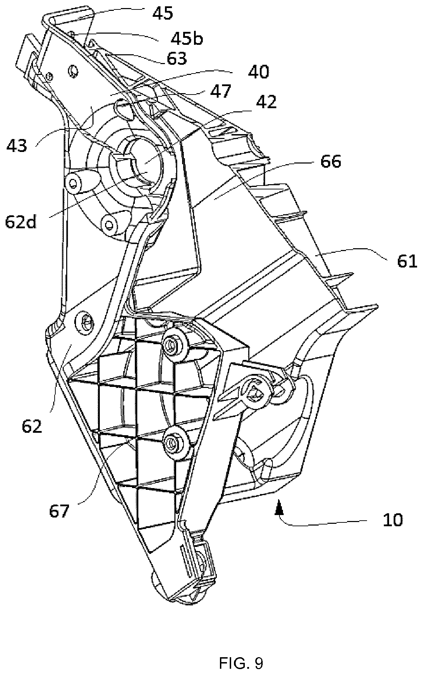

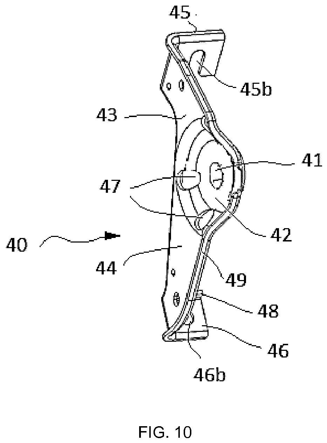

In the second embodiment shown in Figures 6 to 10, the body 60 comprises side walls 61,62 arranged substantially parallel to one another, attached through a back wall 63, the pedal 4 being coupled to the side walls 61,62 through the shaft 6. Particularly, the shaft 6 is coupled to the coupling 61d,62d, shown in Figure 8, arranged respectively in each side wall 61,62. Each coupling 61d,62d is formed by a respective hole where the shaft 6 is coupled. The side walls 61,62 and the back wall 63 demarcate a housing 66 where the shaft 6 and the pedal 4 are housed at least partially. Furthermore, the back wall 63 comprises an opening 69 traversed by a transmission element coupled to the pedal 4, not depicted in the drawings.

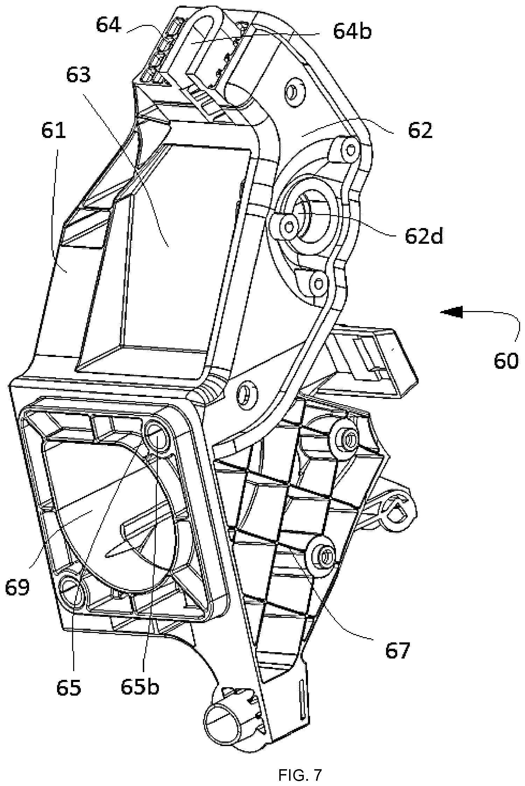

On the other hand, the fixing zones 64,65 are arranged in the back wall 63. Therefore, a first fixing zone 64 arranged close to the housing 61d,62d, is communicated with the housing 66 through a first slot 64b, whereas a second fixing zone 65 is arranged close to the opening 69, shown in Figure 7, the second fixing zone 65 comprising a fixing hole 65b.

In this second embodiment shown in Figures 6 to 10, the support 10 comprises a reinforcement 40 inserted in the first side wall 62. The body 60 is molded on the reinforcement 40. Particularly, the body 60 is injected on the reinforcement 40, covering said reinforcement 40.

The reinforcement 40, shown in detail in Figures 8 to 10, comprises a central body 42 on which there are formed the coupling 62d corresponding to the first side wall 62, a first arm 43 extending from the central body 42 to the first fixing zone 64, and a second arm 44 extending from the central body 42 to the second fixing zone 65, the arms 43,44 forming a substantially V-shaped geometry, the central body 42 being arranged as the vertex of said geometry. The central body 42 comprises a ring-shaped projection 41 extending from a substantially orthogonal base 42b, the coupling 62d being formed on the ring-shaped projection 41.

A rigid and strong support 10 is obtained with minimum reinforcement 40, which reinforces the zone of the support 10 that is subjected to the most stress. The reinforcement 40 optimally transmits the stress generated in the coupling 61d to the structural portion of the motor vehicle, through the respective fixing zones 64,65 of the body 60.

On the other hand, like in the first embodiment, the central body 42 is arranged deep drawn with respect to the arms 43,44, the arms 43,44 being supported on the first side wall 62, the first side wall 62 comprising a geometry substantially adapted to the reinforcement 40.

The reinforcement 40 comprises holes 47 in the central body 42 allowing the correct injection of the plastic along the entire reinforcement 40. On the other hand, each arm 43,44 comprises a bent end 45,46, said bent end 45,46 being inserted in the respective fixing zone 64,65 of the body 60. The first fixing zone 34 is arranged in contact with the first bent end 45, whereas the second fixing zone 65 is arranged in contact with the second bent end 46. Furthermore, the first bent end 45 comprises a slot 45b that is aligned with the slot 44b of the first fixing zone 64 for fixing to the structural portion of the vehicle. Both slots 45b,64b are open slots. On the other hand, the second bent end 46 comprises a hole 46b that is coaxial with the hole 65b of the second fixing zone 65 of the body 60.

On the other hand, the reinforcement 40 comprises a side flange 48,49 extending at least partially along the perimeter of the reinforcement 40. This flange 48, 49 is designed to reinforce the bent ends 45,46 such that it does not deform in the event of high loads applied on the pedal 4.

On the other hand, the side walls 61,62 as well as the back wall 63 comprise ribs 67 reinforcing the body 60.

In both embodiments, the reinforcement 20;40 is made of steel, whereas the body 30;60 is made of glass fiber-reinforced polypropylene.

Generally, although glass fiber-reinforced polypropylene has fewer mechanical properties than a polyamide with an equivalent glass fiber reinforcement (material used in the supports for the pedal), its cost is considerably lower. Furthermore, the density of propylene is less than that of an equivalent polyamide, whereby obtaining a body with a smaller weight. On the other hand, since the reinforcement 20;40 is made of a metal material or of a material with similar mechanical properties, it has a behavior comprising rigidity and allowable load at break that is much greater than that of any polyamide. This is important because in some extreme load situations or configurations, even polyamide may not be sufficient, having to resort to more expensive and heavier materials. The obtained support 1;60 thus entails considerable economic savings, even when accounting for the cost of introducing the reinforcement in the support.

Finally, although the support in the shown embodiments comprises a single reinforcement in one of the side walls of the body, the support in other embodiments could comprise two reinforcements, each of which is arranged in a side wall of the body either by coupling or by attachment by means of injection molding on the corresponding side wall.

## Claims

1. Support suitable for coupling at least one pedal (4) to a structural portion of a motor vehicle, comprising a body (30;60) comprising at least one coupling (31d,32d;61d,62d) for coupling the pedal (4) to the support (1;10) through a shaft (6) of the pedal (4) and at least one fixing zone (34,35;64,65) for fixing the support (1;10) to the structural portion, and at least one reinforcement (20;40) fixed to said body (30;60), whereby the body (30;60) is made of a plastic material and the reinforcement (20;40) is made of metal, **characterised in that** the reinforcement (20;40) comprises a central body (22;42) that is fixed to the coupling (31d,32d;61d,62d), a first arm (23;43) extending from the central body (22;42) to a first fixing zone (34;64) of the body (30;60) and a second arm (24;44) extending from the central body (22;42) to a second fixing zone (35;65) of the body (30;60), the arms (23,24;43;44) together with the central body (22;42) forming a substantially V-shaped geometry, the central body (22;42) being arranged as the vertex of said geometry.

2. Support according to the preceding claim, wherein the reinforcement (20;40) is arranged in a side wall (32;62) of the body (30;60).

3. Support according to any of the preceding claims, wherein the central body (22;42) is arranged deep drawn with respect to the arms (23,24;43,44).

4. Support according to any of the preceding claims, wherein the central body (22;42) comprises a ring-shaped projection (21;41) housed at least partially in the coupling (31d,32d;61d,62d).

5. Support according to the preceding claims, wherein each arm (23,24;43,44) comprises a bent end (25,26;45,46) arranged in contact with the corresponding fixing zone (34,35;64,65) of the body (30;60).

6. Support according to the preceding claim, wherein the bent end (25,26;45,46) of the reinforcement (20;40) and the fixing zone (33,34;64,65) of the corresponding body (30;60) comprise, respectively, substantially coaxial slots (25b,26b,35b,36b) for fixing the support (1;10) to the motor vehicle.

7. Support according to any of the preceding claims, wherein the body (60) is injected on the reinforcement (40).

8. Support according to the preceding claim, wherein the reinforcement (40) is coated with plastic.

9. Support according to any of claims 1 to 6, wherein the reinforcement (20) is coupled to the body (30).

10. Support according to the preceding claim and to claim 2, wherein the reinforcement (20) comprises holes (27) in the central body (22) collaborating with projections (37) extending from the side wall (32) for positioning the reinforcement (20) with respect to the body (30).

11. Support according to any of the preceding claims, wherein the body (30;60) is made of glass fiber-reinforced polypropylene.

12. Support according to any of the preceding claims comprising two reinforcements (20;40), each of which is arranged in a side wall (31,32;61,62) of the body (30;60).

## Patentansprüche

1. Träger zur Ankopplung von mindestens einem Pedal (4) an einem strukturellen Teil eines Kraftfahrzeugs, umfassend einen Körper (30; 60), welcher mindestens eine Kopplung (31d, 32d; 61d, 62d) zur Kopplung vom Pedal (4) am Träger (1; 10) über eine Welle (6) des Pedals (4) und mindestens einen Fixierungsbereich (34, 35; 64, 65) zur Fixierung des Trägers (1; 10) am strukturellen Teil, und mindestens eine Verstärkung (20; 40), welche am genannten Körper (30; 60) fixiert ist, umfasst, wodurch der Körper (30; 60) aus einem Kunststoffmaterial hergestellt ist und die Verstärkung (20; 40) aus Metall hergestellt ist, **dadurch gekennzeichnet, dass** die Verstärkung (20; 40) einen mittigen Körper (22; 42), welcher an der Kopplung (31d, 32d; 61d, 62d) fixiert ist, einen ersten Arm (23; 43), welcher sich vom mittigen Körper (22; 42) bis zu einem ersten Fixierungsbereich (34; 64) des Körpers (30; 60) erstreckt, und einen zweiten Arm (24; 44), welcher sich vom mittigen Körper (22; 42) bis zu einem zweiten Fixierungsbereich (35; 65) des Körpers (30; 60) erstreckt, umfasst, wobei die Arme (23, 24; 43; 44) zusammen mit dem mittigen Körper (22; 42) eine im Wesentlichen V-förmige Geometrie bilden, wobei der mittige Körper (22; 42) als Scheitelpunkt der genannten Geometrie angeordnet ist.

2. Träger nach dem vorhergehenden Anspruch, wobei die Verstärkung (20; 40) in einer Seitenwand (32; 62) des Körpers (30; 60) angeordnet ist.

3. Träger nach einem der vorhergehenden Ansprüche, wobei der mittige Körper (22; 42) in Bezug auf die Arme (23, 24; 43, 44) tiefgezogen angeordnet ist.

4. Träger nach einem der vorhergehenden Ansprüche, wobei der mittige Körper (22; 42) einen ringförmigen Vorsprung (21; 41) umfasst, welcher mindestens teilweise in der Kopplung (31d, 32d; 61d, 62d) aufgenommen ist.

5. Träger nach den vorhergehenden Ansprüchen, wobei jeder Arm (23, 24; 43, 44) ein gebogenes Ende (25, 26; 45, 46) umfasst, welches in Kontakt mit dem entsprechenden Fixierungsbereich (34, 35; 64, 65) des Körpers (30; 60) angeordnet ist.

6. Träger nach dem vorhergehenden Anspruch, wobei das gebogene Ende (25, 26; 45, 46) der Verstärkung (20; 40) und der Fixierungsbereich (33, 34; 64, 65) des entsprechenden Körpers (30; 60) jeweils im Wesentlichen koaxiale Schlitze (25b, 26b, 35b, 36b) zur Fixierung des Trägers (1; 10) am Kraftfahrzeug umfassen.

7. Träger nach einem der vorhergehenden Ansprüche, wobei der Körper (60) auf der Verstärkung (40) gespritzt ist.

8. Träger nach dem vorhergehenden Anspruch, wobei die Verstärkung (40) mit Kunststoff beschichtet ist.

9. Träger nach einem der Ansprüche 1 bis 6, wobei die Verstärkung (20) am Körper (30) gekoppelt ist.

10. Träger nach dem vorhergehenden Anspruch und Anspruch 2,
wobei die Verstärkung (20)
Löcher (27) im mittigen Körper (22) umfasst, welche mit Vorsprüngen (37) zusammenwirken, welche sich von der Seitenwand (32) erstrecken, zur Platzierung der Verstärkung (20) in Bezug auf den Körper (30).

11. Träger nach einem der vorhergehenden Ansprüche, wobei der Körper (30; 60) aus mit Glasfaser verstärktem Polypropylen hergestellt ist.

12. Träger nach einem der vorhergehenden Ansprüche umfassend zwei Verstärkungen (20 ;40), wobei jede in einer Seitenwand (31, 32; 61, 62) des Körpers (30; 60) angeordnet ist.

## Revendications

1. Support conçu pour coupler au moins une pédale (4) à une partie structurelle d'un véhicule automobile, comprenant un corps (30; 60) comprenant au moins un couplage (31d, 32d; 61d, 62d) pour coupler la pédale (4) au support (1; 10) à travers un arbre (6) de la pédale (4) et au moins une zone de fixation (34, 35; 64, 65) pour fixer le support (1; 10) à la partie structurelle, et au moins un renfort (20; 40) fixé audit corps (30; 60), ce qui fait que le corps (30; 60) est réalisé en une matière plastique et le renfort (20; 40) est réalisé en métal, **caractérisé en ce que** le renfort (20; 40) comprend un corps central (22; 42) qui est fixé au couplage (31d, 32d; 61d, 62d), un premier bras (23; 43) s'étendant depuis le corps central (22; 42) jusqu'à une première zone de fixation (34; 64) du corps (30 ; 60) et un second bras (24; 44) s'étendant depuis le corps central (22; 42) jusqu'à une seconde zone de fixation (35; 65) du corps (30; 60), les bras (23, 24; 43; 44) conjointement avec le corps central (22; 42) formant une géométrie essentiellement en forme de V, le corps central (22; 42) étant aménagé comme le sommet de ladite géométrie.

2. Support selon la revendication précédente, dans lequel le renfort (20; 40) est aménagé dans une paroi latérale (32; 62) du corps (30; 60).

3. Support selon l'une quelconque des revendications précédentes, dans lequel le corps central (22; 42) est aménagé embouti par rapport aux bras (23, 24; 43, 44).

4. Support selon l'une quelconque des revendications précédentes, dans lequel le corps central (22; 42) comprend une saillie annulaire (21; 41) logée au moins partiellement dans le couplage (31d, 32d; 61d, 62d).

5. Support selon l'une quelconque des revendications précédentes, dans lequel chaque bras (23, 24; 43, 44) comprend une extrémité coudée (24, 25; 45, 46) aménagée en contact de la zone de fixation correspondante (34, 35; 64, 65) du corps (30; 60).

6. Support selon la revendication précédente, dans lequel l'extrémité coudée (25, 26; 45, 46) du renfort (20; 40) et la zone de fixation (33, 34; 64, 65) du corps correspondant (30 ; 60) comprennent, respectivement, des rainures essentiellement coaxiales (25b, 26b, 35b, 36b) pour fixer le support (1; 10) au véhicule automobile.

7. Support selon l'une quelconque des revendications précédentes, dans lequel le corps (60) est injecté sur le renfort (40).

8. Support selon la revendication précédente, dans lequel le renfort (40) est revêtu de plastique.

9. Support selon l'une quelconque des revendications 1 à 6, dans lequel le renfort (20) est couplé au corps (30).

10. Support selon la revendication précédente et la revendication 2,
dans lequel le renfort (20)
comprend des trous (27) dans le corps central (22) collaborant avec des saillies (37) s'étendant depuis la paroi latérale (32) pour positionner le renfort (20) par rapport au corps (30).

11. Support selon l'une quelconque des revendications précédentes, dans lequel le corps (30; 60) est réalisé en polypropylène renforcé de fibre de verre.

12. Support selon l'une quelconque des revendications précédentes, comprenant deux renforts (20; 40), chacune desquelles est aménagée dans une paroi latérale (31, 32; 61, 62) du corps (30; 60).
